# FASCICULE DE BREVET EUROPEEN

(11) **EP 0 557 596 B1**
(45) Date de publication et mention de la délivrance du brevet: **24.09.1997**
(21) Numéro de dépôt: 92120552.2
(22) Date de dépôt: 02.12.1992
(51) Int. Cl.: A23L 1/36, A23G 3/00

(54) **Matière première aromatique à base de noisettes torrefiées et broyées**
Aromatischer Rohstoff aus Basis von gerösteten und gemahlen Haselnüsse
Aromatic food product base from roasted and ground hazel nuts

(30) Priorité: 26.02.1992 CH 596/92
(43) Date de publication de la demande: 01.09.1993
(73) Titulaire: SOCIETE DES PRODUITS NESTLE S.A., 1800 Vevey (CH)
(72) Inventeur: Chablaix, René Eugène, CH-1007 Lausanne (CH); Hug, Daniel, CH-1806 St.-Legier (CH)
(74) Mandataire: Wavre, Claude-Alain

(56) Documents cités:
- FR-A- 2 656 200
- US-A- 3 700 462
- Section Ch, Week 8444, 1984 Derwent Publications Ltd., London, GB; Class D13, AN 84-273721
- Peanuts-Production, Processing et Products, pages 159-161

## Description

La présente invention a pour objet une matière première aromatique à base de graines d'oléagineuses rôties et broyées, ainsi qu'un procédé de préparation d'une telle matière.

On connaît divers procédés de préparation de masses à base de graines broyées d'oléagineuses telles que des amandes ou des noisettes, par exemple, destinées à être utilisées dans la confection de produits de confiserie.

C'est ainsi que FR 1318539 (H. Shoppe & Schultz) décrit un procédé dans lequel on prépare une masse à base de noix, amandes, noisettes ou autres, notamment grillées et/ou non grillées, de sucre et d'eau, on sèche cette masse dans une tour de séchage, et l'on obtient une poudre qui peut être incorporée à une crème fouettée, à des crèmes grasses ou à des mélanges pralinés, par exemple.

De même, WO 86/03945 (Franz Haas Waffelmaschinen Industriegesellschaft M.B.H.) décrit un procédé dans lequel on comprime des noix, amandes, noisettes ou autres pour leur donner à toutes la même épaisseur, on les rôtit toutes ensemble, en présence d'un support d'arôme tel qu'un sucre, de manière qu'elles présentent un degré de rôtissage homogène, et l'on en prépare une masse pour la confection de crèmes.

US-A-3700462 (A. Stefanucci et al.) décrit un procédé de préparation d'un mélange de plusieurs lots d'un même café haut de gamme rôtis à des degrés divers choisis de part et d'autre d'un degré optimum, mélange qui présente un arôme équilibré supérieur à l'arôme présenté par ce café haut de gamme rôti uniformément à ce degré optimum, et une utilisation particulière d'un tel mélange pour mieux équilibrer l'arôme d'un café rôti moulu bas de gamme.

"Peanuts - Production, Processing, Products", J. G. Woodroof et al., AVI publ., pp. 159-161, (1973), décrit comment différentes variétés d'arachides destinées à la fabrication du même beurre d'arachide doivent être rôties séparément pour parvenir avec chacune au même degré de rôtissage.

Le but de la présente invention est de fournir une matière première aromatique à base de graines d'oléagineuses rôties et broyées dont l'intensité et la note aromatiques puissent être ajustées de manière précise et aisée.

A cet effet, la matière première aromatique selon la présente invention comprend un mélange de noisettes (A) torréfiées et broyées présentant des composantes de couleur L de 20-30, a de 0,5-4 et b de 0,5-6, et de noisettes (B) rôties et broyées présentant des composantes de couleur L de 40-60, a de 5-12 et b de 20-30, de préférence dans une proportion pondérale de 20:80-80:20.

De même, dans le procédé de préparation d'une matière première aromatique selon la présente invention, on torréfie des noisettes (A) à 220-320°C durant 1-20 min de manière qu'elles présentent des composantes de couleur L de 20-30, a de 0,5-4 et b de 0,5-6, on rôtit des noisettes (B) à 140-180°C durant 1-40 min de manière qu'elles présentent des composantes de couleur L de 40-60, a de 5-12 et b de 20-30, on broye les graines torréfiées (A) et les graines rôties (B) et on les mélange, de préférence dans une proportion pondérale de 20:80-80:20.

On a constaté qu'il est effectivement possible d'ajuster ainsi aisément, et de manière précise et reproductible, l'intensité et la note aromatiques, et plus particulièrement l'intensité et la note caractéristique d'un arôme de graine rôtie que peut présenter une matière première de ce type.

Lesdites noisettes A torréfiées et B rôties sont avantageusement caractérisées par leur couleur, les noisettes torréfiées présentant une couleur, par exemple brune, plus foncée que les noisettes rôties qui présentent une couleur, par exemple beige, plus claire. Cette couleur est définie par ses composantes L, a, b que l'on peut déterminer de manière connue à l'aide d'un colorimètre ou chromamètre adéquat du commerce, par exemple.

Pour réaliser cette torréfaction et/ou ce rôtissage, on peut utiliser un torréfacteur présentant une surface chauffée au gaz, à l'électricité ou à la vapeur, ou un four à infra rouge, à microondes ou à air chaud, par exemple.

Pour broyer ensuite les noisettes torréfiées ou rôties, on peut, selon le degré de finesse souhaité, utiliser un moulin à marteau, un moulin à couteaux, un moulin à pierre, un moulin à billes et/ou un affineur à cylindres, par exemple. De préférence, on broye d'abord les noisettes en grains de 0,5-2 mm, puis on broye ces grains en particules de 20-40 µ.

La matière première aromatique selon la présente invention est destinée à être utilisée de préférence pour la confection d'une pâte ou crème de confiserie à laquelle elle permet de conférer avec une reproductibilité remarquable un arôme d'intensité prédéterminée qui présente une note caractéristique de noisette rôtie.

L'exemple ci-après est donné à titre d'illustration du produit et du procédé selon la présente invention. Les pourcentages y sont indiqués en poids.

### Exemple

A) On charge 35,5 kg de noisettes du Piémont natures présentant un diamètre de 13-15 mm dans un torréfacteur à gaz où l'on fait régner une température de 240-250°C. On les torréfie ainsi durant 6,5 min.
   On les brosse, on les broye grossièrement dans un moulin à couteaux puis finement dans un broyeur à pierre.
B) On charge 100 kg de noisettes du Piémont natures présentant un diamètre de 13-15 mm dans un torréfacteur à vapeur dans lequel on fait régner une température de 145-155°C. On les rôtit ainsi durant 8,5 min.
   On les brosse, on les broye grossièrement dans un moulin à couteau puis finement dans un broyeur à pierre.

On prélève huit échantillons de noisettes A torréfiées broyées et huit échantillons de noisettes B rôties broyées. On détermine les composantes L, a, b de la couleur de chacun de ces échantillons à l'aide d'un chromamètre MINOLTA équipé d'une sonde de mesure CR-310.

Pour chaque détermination, on place l'échantillon dans un réceptacle fermé par une plaque de verre. Le réceptacle est placé sous un faisceau de lumière incidente correspondant à la lumière du jour. La lumière réfléchie par l'échantillon est détectée au travers de trois filtres de couleur. L'appareil affiche la valeur moyenne de trois mesures successives réalisées automatiquement (trois flashes). Le résultat est exprimé en composantes L, a, b.

Les résultats sont présentés dans les tableaux A et B ci-après.

**Tableau A**

| No. échantillon | NOISETTES TORREFIEES | | |
|---|---|---|---|
| | L | a | b |
| 1 | 22,34 | 2,21 | 2,62 |
| 2 | 24,90 | 1,65 | 3,26 |
| 3 | 22,14 | 2,27 | 2,53 |
| 4 | 22,24 | 2,28 | 2,66 |
| 5 | 22,30 | 2,20 | 2,70 |
| 6 | 24,97 | 1,90 | 3,31 |
| 7 | 24,82 | 1,53 | 3,10 |
| 8 | 24,67 | 1,69 | 3,16 |
| MOYENNE | 23,55 | 1,97 | 2,92 |
| écart type | 1,30 | 0,29 | 0,30 |

**Tableau B**

| No. échantillon | NOISETTES ROTIES | | |
|---|---|---|---|
| | L | a | b |
| 1 | 49,74 | 8,20 | 25,83 |
| 2 | 48,84 | 8,36 | 26,17 |
| 3 | 49,82 | 8,12 | 26,13 |
| 4 | 50,31 | 8,22 | 26,42 |
| 5 | 48,06 | 8,74 | 26,02 |
| 6 | 49,90 | 8,00 | 26,52 |
| 7 | 49,07 | 8,38 | 26,31 |
| 8 | 48,25 | 8,44 | 26,00 |
| MOYENNE | 49,25 | 8,31 | 26,18 |
| écart type | 0,77 | 0,21 | 0,22 |

On prépare trois matières premières aromatiques en mélangeant les noisettes A torréfiées broyées et les noisettes B rôties broyées dans trois proportions pondérales différentes, à savoir
i) 50:50
ii) 60:40
iii) 70:30

Le mélange i) se distingue par sa finesse. Le mélange ii) présente une note aromatique de noisette rôtie plus nette. Le mélange iii) présente un arôme intense et caractéristique de noisette rôtie. Le jeu sur la proportion pondérale des deux types de noisettes A torréfiées et B rôties permet donc de faire ressortir à volonté la finesse, la note caractéristique ou l'intensité de l'arôme de noisette rôtie.

Les différentes nuances se retrouvent dans les qualités organoleptiques respectives de trois pâtes aux noisettes préparées à partir de chacun des mélanges i), ii) et iii), chaque pâte étant préparée en passant dans un affineur à cylindres une partie en poids de mélange et deux parties en poids de sucre et en y ajoutant 25% de matière grasse végétale.

## Revendications

1. Matière première aromatique comprenant un mélange de noisettes (A) torréfiées et broyées présentant des composantes de couleur L de 20-30, a de 0,5-4 et b de 0,5-6, et de noisettes (B) rôties et broyées présentant des composantes de couleur L de 40-60, a de 5-12 et b de 20-30.

2. Matière selon la revendication 1, dans laquelle ledit mélange comprend des noisettes (A) torréfiées et broyées et des noisettes (B) rôties et broyées dans une proportion pondérale de 20:80-80:20.

3. Procédé de préparation d'une matière première aromatique, dans lequel on torréfie des noisettes (A) à 220-320°C durant 1-20 min de manière qu'elles présentent des composantes de couleur L de 20-30, a de 0,5-4 et b de 0,5-6, on rôtit des noisettes (B) à 140-180°C durant 1-40 min de manière qu'elles présentent des composantes de couleur L de 40-60, a de 5-12 et b de 20-30, on broye les graines torréfiées (A) et les graines rôties (B) et on les mélange.

4. Procédé selon la revendication 3, dans lequel on mélange des noisettes (A) torréfiées et broyées et des noisettes (B) rôties et broyées dans une proportion pondérale de 20:80-80:20.

5. Utilisation de la matière première aromatique selon l'une des revendications 1 et 2 ou susceptible d'être obtenue par le procédé selon l'une des revendications 3 et 4 pour la confection d'une pâte ou crème de confiserie.

## Claims

1. Flavouring raw material comprising a mixture of roasted and ground hazelnuts (A) having colour components L of 20-30, a of 0.5-4 and b of 0.5-6, and toasted and ground hazelnuts (B) having colour components L of 40-60, a of 5-12 and b of 20-30.

2. Material according to claim 1 wherein the said mixture comprises roasted and ground hazelnuts (A) and toasted and ground hazelnuts (B) in a weight proportion of 20:80-80:20.

3. Process for preparing a flavouring raw material, wherein hazelnuts (A) are roasted at 220-320°C for 1-20 min so that they have colour components L of 20-30, a of 0.5-4 and b of 0.5-6, the hazelnuts (B) are toasted at 140-180°C for 1-40 min so that they have colour components L of 40-60 a of 5-12 and b of 20-30, the roasted grains (A) and the toasted grains (B) are ground and are mixed.

4. Process according to claim 3, wherein the roasted and ground hazelnuts (A) and the toasted and ground hazelnuts (B) are mixed in a weight proportion of 20:80-80:20.

5. Use of the flavouring raw material according to either of claims 1 or 2 or able to be obtained by the process according to either of claims 3 or 4 for the preparation of a confectionery paste or cream.

## Patentansprüche

1. Aromatischer Rohstoff, der eine Mischung aus gerösteten und gemahlenen Haselnüssen (A) mit Farbkomponenten L von 20-30, a von 0,5-4 und b von 0,5-6 und aus angerösteten und gemahlenen Haselnüssen (B) mit Farbkomponenten L von 40-60, a von 5-12 und b von 20-30 aufweist.

2. Rohstoff nach Anspruch 1, in dem diese Mischung geröstete und gemahlenen Haselnüsse (A) und angeröstete und gemahlenen Haselnüsse (B) in einem Gewichtsverhältnis von 20:80 bis 80:20 aufweist.

3. Verfahren zur Herstellung eines aromatischen Rohstoffs, in dem man Haselnüsse (A) während 1-20 min bei 220 bis 320 °C röstet, so daß sie Farbenkomponenten L von 20-30, a von 0,5-4 und b von 0,5-6 erhalten, Haselnüsse (B) während 1-40 min bei 140-180 °C anröstet, so daß sie Farbkomponenten L von 40-60, a von 5-12 und b von 20-30 erhalten, die gerösteten Haselnüsse (A) und die angerösteten Haselnüsse (B) mahlt und sie mischt.

4. Verfahren nach Anspruch 3, in dem man geröstete und gemahlenen Haselnüsse (A) und angeröstete und gemahlenen Haselnüsse (B) in einem Gewichtsverhältnis von 20:80 bis 80:20 mischt.

5. Verwendung des aromatischen Rohstoffs nach einem der Ansprüche 1 und 2 oder des in dem Verfahren nach einem der Ansprüche 3 und 4 herstellbaren aromatischen Rohstoffs zur Zubereitung einer Süßwarenpaste oder -creme.
